# DEMANDE DE BREVET EUROPEEN

(11) **EP 0 893 903 A1**
(43) Date de publication de la demande: **27.01.1999**
(21) Numéro de dépôt: 98202291.5
(22) Date de dépôt: 08.07.1998
(51) Int. Cl.: H04M 1/72, H01M 2/10

(54) **Téléphone avec prise d'extraction du module de batterie**

(30) Priorité: 16.07.1997 FR 9709026
(71) Demandeur: Koninklijke Philips Electronics N.V., 5621 BA Eindhoven (NL)
(72) Inventeur: Godais, Marc, 75008 Paris (FR)
(74) Mandataire: Chaffraix, Jean

(57) **Abrégé**

L'invention concerne un téléphone comportant un boîtier principal (11), un couvercle, un module de batterie (13) destiné à se loger à l'intérieur du boîtier et maintenu en contact électrique avec le téléphone par des ressorts (14).

Conformément à l'invention, le module de batterie est doté d'une prise d'extraction (30, 32) située face auxdits ressorts lorsque le module de batterie est en place dans le boîtier.

Cette prise d'extraction est par exemple constituée par une lamelle (30) qui prolonge le corps (31) du module de batterie.

Applications: téléphone mobile notamment.

## Description

L'invention concerne un téléphone comportant un boîtier principal, un couvercle, un module de batterie destiné à se loger à l'intérieur du boîtier et maintenu en contact électrique avec le téléphone par au moins un ressort, et des moyens d'extraction du module de batterie.

L'invention concerne également un module de batterie destiné à être inséré à l'intérieur d'un téléphone comportant un boîtier et un couvercle, ledit boîtier étant doté d'au moins un ressort pour maintenir le module de batterie en contact électrique avec le téléphone.

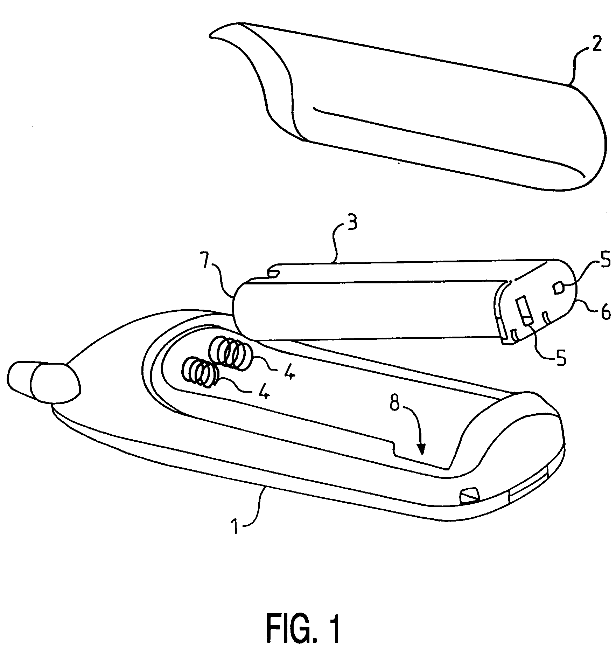

L'extraction d'un tel module de batterie est rendue particulièrement difficile du fait de la pression exercée par le ressort. Certains téléphones actuellement disponibles dans le commerce sont donc dotés de moyens d'extraction du module de batterie. C'est notamment le cas du téléphone mobile d160 fabriqué par Motorola. Une représentation schématique de ce téléphone est donnée sur la figure 1. Il est composé d'un boîtier 1, d'un couvercle 2 et d'un module de batterie 3. Des ressorts 4 sont prévus sur le boîtier 1 pour maintenir le module de batterie 3 en contact électrique avec le téléphone lorsqu'il est en place dans le boîtier. Des contacts électriques 5 sont portés par une paroi 6 du module de batterie. Cette paroi 6 est située à l'opposé de la paroi 7 qui est en contact avec les ressorts 4 lorsque le module de batterie est en place dans le boîtier.

Un décrochement 8 est prévu sur le côté du boîtier 1, près des contacts 5, pour faciliter l'extraction du module de batterie 3. Un tel dispositif d'extraction risque donc à plus ou moins long terme de détériorer les contacts.

L'invention a pour but de proposer un téléphone et un module de batterie pour téléphone qui ne présente pas cet inconvénient. Pour cela, un téléphone selon l'invention et tel que défini dans le paragraphe introductif est caractérisé en ce que lesdits moyens d'extraction sont constitués par une prise d'extraction située sur le module de batterie à l'opposé de la partie du module de batterie qui est en contact avec le ressort lorsque le module de batterie est en place dans le boîtier.

De même, un module de batterie selon l'invention et tel que défini dans le paragraphe introductif est caractérisé en ce qu'il comporte des moyens d'extraction situés à l'opposé de la partie du module de batterie qui est en contact avec le ressort lorsque le module de batterie est en place dans le boîtier.

Ainsi l'extraction du module de batterie s'effectue parallèlement aux contacts par une opération de pression sur les ressorts qui permet de dégager les contacts avant de tirer sur le module de batterie. Les contacts sont donc préservés.

L'invention présente l'avantage supplémentaire par rapport à l'art antérieur d'améliorer la tenue en main du module de batterie lors de son extraction.

L'invention sera mieux comprise et d'autres détails apparaîtront à la lumière de la description qui va suivre en regard des dessins annexés qui sont donnés à titre d'exemples non limitatifs et dans lesquels:
- la figure 1 représente un téléphone et un module de batterie selon l'art antérieur,
- les figures 2A, 2B et 2C représentent schématiquement un premier mode de réalisation de l'invention,
- la figure 3 représente schématiquement un second mode de réalisation de l'invention.

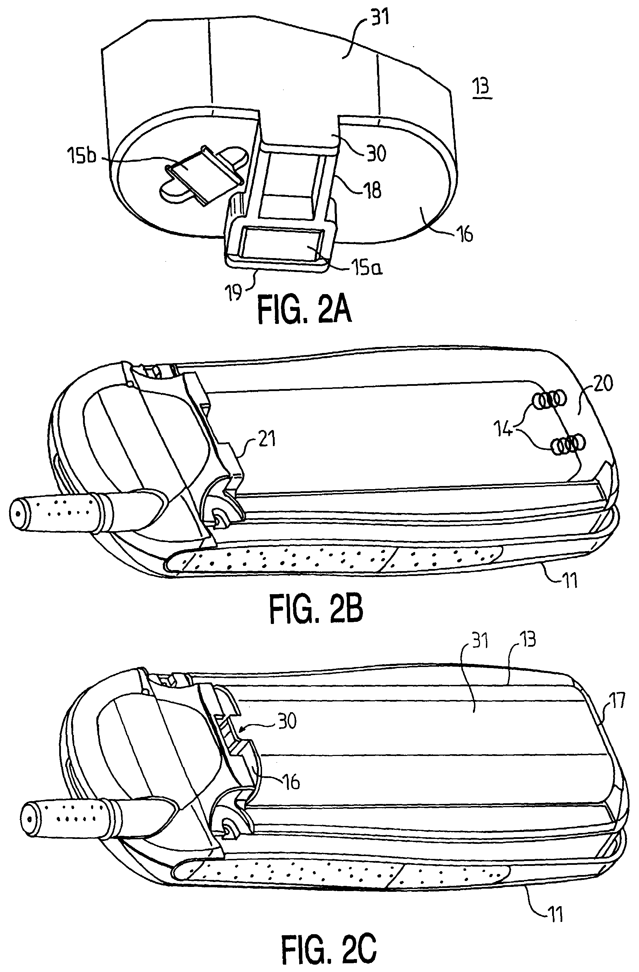

Sur la figure 2 on a représenté de façon schématique un téléphone selon l'invention. Ce téléphone comporte un boîtier 11, un couvercle non représenté, et un module de batterie 13.

Le module de batterie 13 est doté de deux parois d'extrémités 16 et 17. La paroi 16 est dotée de nervures de renforcement 18 en forme de H, et d'une languette 19 disposée à la base du H. La partie inférieure du H porte un premier contact 15a situé au dessus de la languette 19. Un second contact 15b est porté directement par la paroi 16.

Le boîtier 11 est doté d'une base 20 qui porte deux ressorts 14, et d'une paroi 21, qui fait face à la base 20, et qui porte deux contacts non représentés. Lorsque le module de batterie 13 est en place dans le boîtier 11, les ressorts 14 sont en contact avec la paroi 17. Une pression est donc exercée sur le module de batterie, de telle sorte que les deux contacts portés par la paroi 21 coopèrent avec les contacts 15a et 15b du module de batterie.

La languette 19 a pour fonction d' escamoter le contact de la paroi 21 du boîtier qui correspond au contact 15a porté par la partie inférieure des nervures en H lors de l'insertion du module de batterie.

Conformément à l'invention, le module de batterie 13 est doté d'une prise d'extraction qui, dans cet exemple de réalisation, est constituée par une saillie 30 qui a la forme d'une lamelle et qui prolonge le corps 31 du module de batterie. L'ensemble constitué par le corps 31 du module et la lamelle 30 constitue une seule pièce plastique réalisée par moulage.

Dans un mode de réalisation particulièrement robuste, la lamelle 30 repose sur les montants verticaux des nervures en H dont est dotée la paroi 16.

Pour extraire le module de batterie 13 du boitier 11, l'utilisateur insère un doigt, un ongle ou éventuellement un outil sous la lamelle 30: un mouvement de pression vers les ressorts 14 lui permet de dégager les contacts 15a et 15b, puis un mouvement de levier hors du boîtier 11 lui permet d'extraire le module de batterie sans détériorer les contacts.

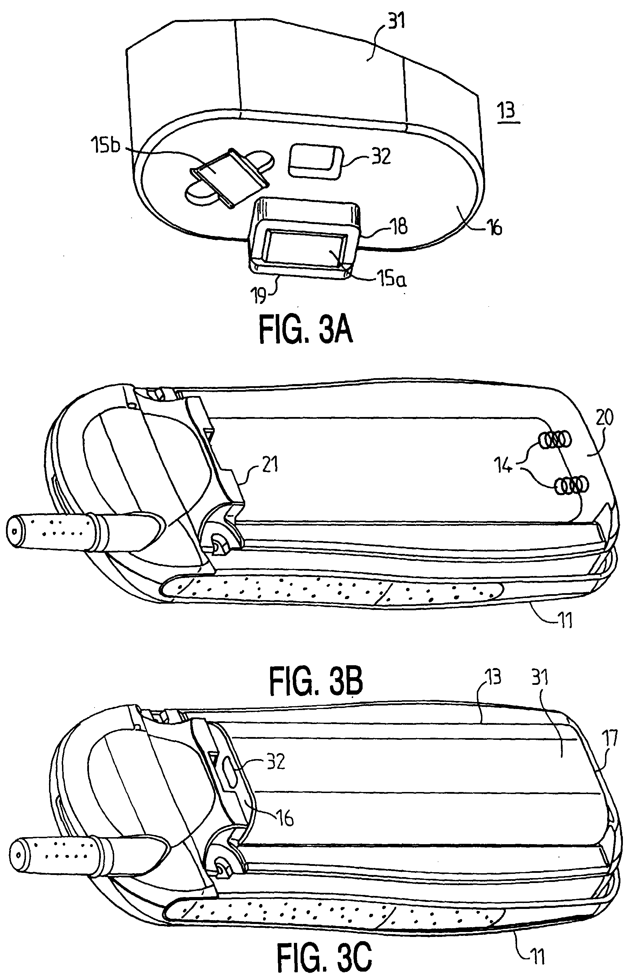

Sur la figure 3 on a représenté un autre exemple de réalisation de l'invention dans lequel la prise d'extraction du module de batterie est constituée par un évidement 32 réalisé dans la paroi 16 du module de batterie.

L'invention n'est pas limitée aux modes de réalisation qui viennent d'être décrits. En particulier, les nervures de renforcement en H ne sont pas indispensables, et elles pourraient avoir une autre forme. Il n'est pas nécessaire pour la mise en oeuvre de l'invention que la paroi 21 du boîtier présente un décrochement : il suffit par exemple qu'un espace soit prévu entre la saillie 30 et la surface 33 qui surplombe la paroi 21 du boîtier, de façon à ce que l'utilisateur puisse y insérer un doigt, un ongle, ou éventuellement un outil. Par ailleurs, dans les modes de réalisation qui ont été décrits, la prise d'extraction est centrée par rapport au module de batterie et elle est placée symétriquement par rapport aux ressorts 14. Ce mode de réalisation est optimal, mais il serait également possible de décaler la prise d'extraction. Enfin, dans le cas où la prise d'extraction est constituée par une saillie, d'autres formes qu'une lamelle peuvent être utilisées.

## Revendications

1. Téléphone comportant:
- un boîtier principal (11),
- un couvercle,
- un module de batterie (13) destiné à se loger à l'intérieur du boîtier et maintenu en contact électrique avec le téléphone par au moins un ressort (14),
- des moyens d'extraction du module de batterie,
caractérisé en ce que lesdits moyens d'extraction sont constitués par une prise d'extraction (30, 32) située sur le module de batterie à l'opposé de la partie (17) du module de batterie qui est en contact avec le ressort lorsque le module de batterie est en place dans le boîtier.

2. Téléphone selon la revendication 1, caractérisé en ce que la prise d'extraction est constituée par une saillie du module de batterie (30).

3. Téléphone selon la revendication 2, caractérisé en ce que ledit module de batterie étant doté d'une paroi (16) porteuse de contacts électriques (15a, 15b) sur laquelle sont prévus des nervures de renforcement (18), ladite saillie repose sur lesdites nervures de renforcement.

4. Téléphone selon la revendication 1, caractérisé en ce que la prise d'extraction est constituée par un évidement (32) dans une paroi (16) du module de batterie.

5. Module de batterie (13) destiné à être inséré à l'intérieur d'un téléphone comportant un boîtier (11) et un couvercle, ledit boîtier étant doté d'au moins un ressort (14) pour maintenir le module de batterie en contact électrique avec le téléphone, caractérisé en ce qu'il comporte des moyens d'extraction situés à l'opposé de la partie (17) du module de batterie qui est en contact avec le ressort lorsque le module de batterie est en place dans le boîtier.

6. Module de batterie selon la revendication 5, caractérisé en ce que lesdits moyens d'extraction sont constitués par une saillie (30) dudit module de batterie.

7. Module de batterie selon la revendication 6, caractérisé en ce qu'il est doté d'une paroi (16) porteuse de contacts électriques (15a, 15b) sur laquelle sont prévus des nervures de renforcement (18), et en ce que ladite saillie (30) repose sur lesdites nervures de renforcement.

8. Module de batterie selon la revendication 5, caractérisé en ce que lesdits moyens d'extraction sont constitués par un évidement (32) dans une paroi (16) du module de batterie.
